Europäisches Patentamt

European Patent Office

Office européen des brevets

(11) Publication number: **0 154 053**
**B1**

# (12) EUROPEAN PATENT SPECIFICATION

(45) Date of publication of patent specification: 28.02.90

(21) Application number: 84201895.4

(22) Date of filing: 18.12.84

(51) Int. Cl.⁵: **G 03 B 21/56,** G 03 B 21/62,
G 02 B 21/36

(54) Projection screen.

(30) Priority: 30.12.83 US 567022

(43) Date of publication of application:
11.09.85 Bulletin 85/37

(45) Publication of the grant of the patent:
28.02.90 Bulletin 90/09

(84) Designated Contracting States:
DE FR GB IT

(56) References cited:
EP-A-0 087 753
EP-A-0 148 529
US-A-3 218 924
US-A-3 552 822
US-A-3 639 245
US-A-4 262 077

PATENT ABSTRACTS OF JAPAN, vol. 7, no. 142
(P-205)1287r, 22nd June 1983; & JP - A - 58
55921 (MITSUBISHI RAYON) 02-04-1983

(73) Proprietor: N.V. Philips' Gloeilampenfabrieken
Groenewoudseweg 1
NL-5621 BA Eindhoven (NL)

(72) Inventor: Stanton, Douglas Allan
c/o INT. OCTROOIBUREAU B.V. Prof. Holstlaan 6
NL-5656 AA Eindhoven (NL)

(74) Representative: Cobben, Louis Marie Hubert
et al
INTERNATIONAAL OCTROOIBUREAU B.V. Prof.
Holstlaan 6
NL-5656 AA Eindhoven (NL)

(56) References cited:

PATENT ABSTRACTS OF JAPAN, vol. 7, no. 176
(P-214)1321r, 4th August 1983; & JP - A - 58
79239 (MATSUSHITA DENKI SANGYO) 13-05-
1983

## Description

The present invention relates to an optical transmission sheet, comprising a substrate having a planar front surface; and a plurality of elongate mutually parallel ribs provided on the front surface, the ribs being successively laterally adjacent, each rib being laterally spaced from a successively adjacent rib to form a respective groove therebetween.

In the U.S. patent specification 3.218.924 a transmission sheet including a transparent substrate having front and rear planar surfaces is disclosed. The front planar surface is provided with mutually parallel elongate light-control elements or ribs. The ribs are laterally spaced to form an elongated "V" or similarly-shaped valley or groove between them. Each rib is transparent unitary element having two end surfaces and two side surfaces. Specifically, each rib includes an elongate planar back end surface disposed on the substrate and a front end surface disposed opposite the back end. The back and front ends are connected by a pair of elongate opposite side surfaces which extend from the back end and are sloped to converge generally in a direction toward the front end. Each rib is dimensioned such that a light ray entering the system through the rear side and travelling in a direction perpendicular to the substrate front surface (operational light ray) can leave the system only through preselected rib surfaces such as the curved front. Therefore, the remaining rib surfaces (e.g. side surfaces) are designed or preselected not to transmit an operational light ray out of the system.

Such a sheet may be used to display a lighted image and, can be incorporated in a rear projection screen and used to display, on an enlarged scale, a television/motion picture image or the like projected by an image source such as a cathode ray tube/film projector and focused within the sheet's substrate.

When so incorporated, the system is oriented such that the ribs are elongate in a direction parallel to a viewer spaced from the front side and watching a projected image focused within the system. The front surfaces may then function refractively to control the light intensity of the image in a direction transverse of the viewer. Thus, the front surfaces may be convex or any other shape which can accomplish the desired transverse control. Light intensity of the image in a direction parallel to the viewer may be controlled by known diffusion means.

Because such optical systems, whether or not expanded, are often operated in and exposed to visible ambient light, it is desirable to reduce reflection of such light at the front side of the system. Thus, for example, reduction in the contrast of a projected television image focused in the system is lessened.

This reduction in reflection is accomplished (c.f. EP—A—87753) by blackening the operationally optically non-transmissive side surfaces of the ribs. Blackening as defined herein includes providing a means for reducing both specular and diffuse reflectivity at the system's front side for all wavelengths in the visible electromagnetic spectrum. In other words, blackening includes providing a means for absorbing visible ambient light.

The blackening means may include a thin (e.g. 50 microns) light-absorbent layer such as a black ink or grease provided on substantially the entire area of the rib side surfaces forming the groove. This layer may be provided intimately on the side surfaces by painting, rolling or other overcoating techniques well known. However, the known blackening means have a major drawback because of undesirable absorptive attenuation of operational light by the black layer intimately contacting the relatively large entire area of the rib side surfaces. This attenuation reduces the transmissive efficiency of the system.

The transmission sheet with parallel ribs on the front surface utilizes refractive principles establishing a condition for the phenomenon of total internal reflection to control the direction of operational light travelling through the system. Generally, this condition is established at the rib side surfaces and is not established at the rib front surface.

When a dense medium (e.g. an acrylic plastic) having a first refractive index $n_1$ interfaces with a second medium (e.g. air) having a second refractive index $n_2$, it follows from Snell's law that a critical angle $\theta_c$ is determined. Specifically, $\theta_c = \arcsin(n_2/n_1)$ so that a light ray travelling within the plastic medium and incident upon the plastic-air interface at an angle $\theta$ greater than the critical angle is totally reflected back into the optically more dense plastic.

If a light-absorbent layer would be in intimate physical and, thus, high optical contact with the rib side surfaces forming the groove, the refractive index of the second medium (air) would increase and would cause a corresponding increase in the critical angle, thereby decreasing the range of angles $\theta$ available for total internal reflection.

It is a principal object of the present invention to provide an optical transmission sheet which simultaneously maintains total internal reflective control of operational light and effective absorption of ambient light, wherein the critical angle is maintained and with a transmissive efficiency improved over prior art systems.

The optical transmission sheet according to the present invention is characterized in that in each groove an amount of light absorbent discrete particles is disposed. The particles are disposed loosely within the groove formed between the laterally spaced ribs so that an outer portion of the particles is located at a position generally remote from the substrate rear surface.

Accordingly, the discrete particles must have a chemical composition such that each particle is highly absorbent to visible ambient light. Further, each of the particles must have a shape such that each particle disposed immediately adjacent the groove-forming rib surfaces makes minimal physical (e.g. point) contact and, thus, minimal optical contact with those surfaces. Preferably, the loose particles are round or have otherwise curved shapes. The size of each particle is not critical although should be sufficiently small so that the amount is easily disposable within the groove. Preferably, each particle has a size in a range between approximately 0.5 and 20.0 microns diameter so as to permit the easy disposability and, also, an essentially total absorption of visible light incident upon each particle. A number average particle size of approximately 10 microns diameter is desirable.

Preferably, the particles are contained within the groove by means of a durable, pliable outer layer or skin which is attached continuously along and is extended continuously between the respective rib side surfaces so that the skin is disposed over and contains the particles.

This outer skin may be, for example, a thin elongate transparent film formed of an easily cured thermoplastic or other resinous material applied in a fluid state onto the outer portion of particles by known application techniques. See the *Modern Plastics Encyclopedia, 1983—1984,* (McGraw-Hill, Inc., 1983) for detailed discussions of various transparent plastic films and their respective methods of application. The cured transparent skin is pliable, durable and permits the underlying loose black particles to absorb the ambient light.

Desirably, however, the skin has a chemical composition and a thickness to present a highly (preferably totally) absorbent surface to the ambient light. Thus, the preferred embodiment of the present invention includes a skin comprising the outer portion of the disposed black particles. Preferably, therefore, the particles are thermally and/or chemically fusible without adversely affecting the transparent sheet in order to permit an efficient formation of the outer skin.

For example, round-shaped particles each having a diameter of approximately 10 microns and including carbon black and/or other black substances provided (such as by suitably mixing or blending) with a thermoplastic or an otherwise fusible polymer material may be used. Dry toner powders used in electrophotographic recording processes work especially well. See U.S. Patent Nos.: 3,639,245 and 4,262,077 which both disclose very satisfactory heat and chemically fusible dry powders. Of course, the disposed particle amount may include individual particles having non-identical chemical compositions.

One method for forming the black skin includes applying heat energy directly and precisely at the outer portion of particles and simultaneously at the rib surfaces which physically contact the relevant particles of that portion. This heat energy must have a wavelength, an intensity and an application time sufficient for causing the fusible materials of the outer portion of particles to fuse not only to each other but also to respective parts of the rib side surfaces. Upon cooling, the outer portion forms a durable black skin bonded to relatively small surface areas of the respective rib sides.

Alternatively, the black skin is formed by momentarily contacting the outer portion of particles with a chemical solvent liquid or solvent vapor adequate for fusing the particles. Upon removing the liquid or vapor, a durable light-absorbent skin bonded to the rib side surfaces is formed.

In all of the aforementioned methods for forming the black outer skin, the underlying particles remain loose and mechanically support the overlying outer skin. Further, the optical contact between the loosely disposed particles and the rib surfaces is so minimal that the critical angle at the rib-air interface is substantially unaffected by these particles. The black skin, although having an average thickness (usually essentially uniform) which provides a higher than minimal optical contact with the relevant rib surfaces, has been found not to affect significantly the overall optical performance of the system. The average thickness of the skin preferably is approximately four to nine times the number average size of the particles disposed in the groove.

A method of blackening an optical system includes providing a substrate having a front surface provided with at least a pair of elongate mutually parallel optical elements, each element having opposite side surfaces, the elements being laterally spaced such that respective side surfaces form a groove between the elements; disposing, in the groove, an amount of light absorbent discrete particles, and then containing the particles within the groove. Because of the minimal optical contact, the amount of discrete particles ultimately disposed depends primarily only upon a system design requirement to present a black surface of large area to the ambient light.

Further and still other objects of the present invention will be more readily apparent when taken in conjunction with the accompanying drawing, wherein

Figure 1 is a perspective partial cross-sectional view, on an enlarged scale, of an embodiment of an optical transmission sheet prior to disposing the black discrete particles of the present invention,

Figure 2 is a view taken through the line 1—1 of Figure 1 after disposing the particles,

Figure 3 is a view similar to that of Figure 2 after containing the disposed particles, and

Figure 4 is a diagram explaining the phenomenon of total internal reflection.

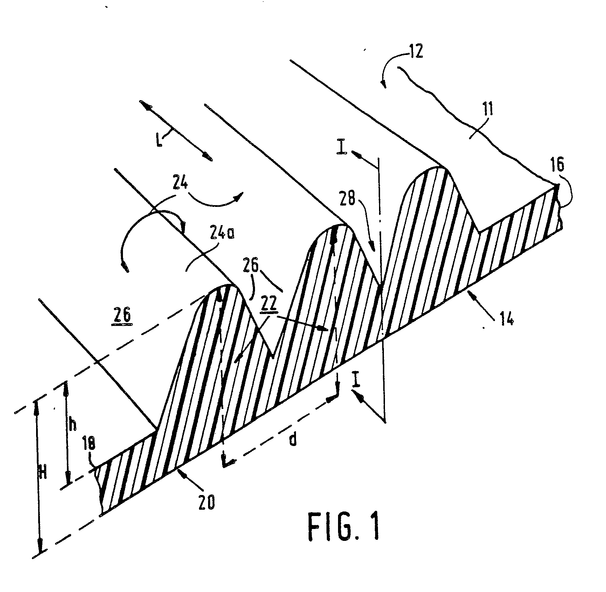

The optical transmission sheet 11 of Figure 1 is a transparent unitary sheet having a front side 12 and a rear side 14. The sheet 11 may be formed from any suitable transparent medium, for example, a polymethylmethacrylate which has a refractive index $n_1$ equal to 1.49.

The sheet includes a substrate 16 having a front planar surface 18 and a rear planar surface 20. At least one pair of elongate mutually parallel identical ribs 22 is disposed on the front surface 18.

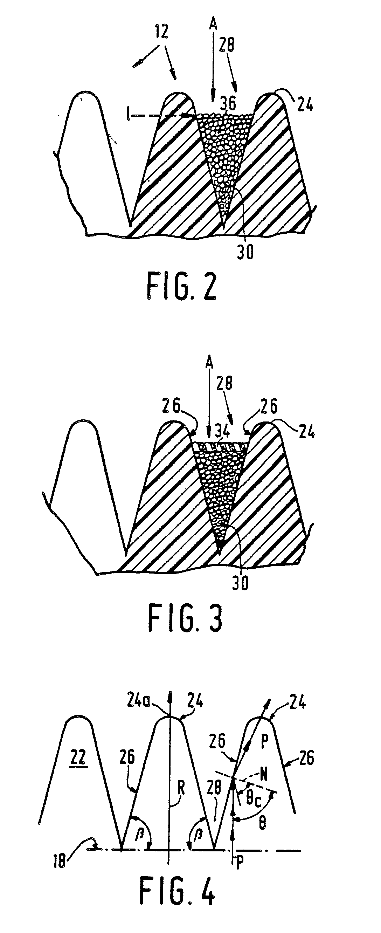

Each rib 22 comprises an elongate planar back end surface (not shown) and an elongate curved front end surface 24 having an apex 24a. Each rib further comprises a pair of steep opposite side surfaces 26 which connect the back end to the front end 24. The sides 26 of each rib are oppositely constantly sloped at equal angles β (Fig. 4) to converge toward and terminate in the front end 24.

As shown, the ribs 22 are successively laterally adjacent and the adjacent side surfaces 26 are contiguous at the substrate surface 18. Each rib 22 is laterally spaced from an adjacent rib so that the respective surfaces 26 form between them an elongate "V"-shaped groove 28. Typically, such as for projection screen applications, the sheet 11 is large (e.g. having an area of about twelve square feet) and is formed or provided with a large plurality of mutually parallel ribs 22 which form respective grooves 28 between them. The sheet may then be cut, for example, by sawing to any desired size after disposing and containing the absorbing means (discussed below).

The sheet 11 has a height H of approximately five mm as measured from the rear surface 20 to the apex 24a of the curved front surface 24, while each rib 22 has a height h which is approximately two mm. The center to center distance (pitch) d between ribs is approximately one mm. Each surface 24 is convex having a radius of curvature of approximately two-tenths mm. Of course, dependent upon the particular system application, rib front surfaces 24 may have any desired shape (e.g. concave) for controlled transmission of light out of the system 10, and may or may not be all identically shaped. The ribs 22 may have any desired length L dependent again upon the particular application of the system 10.

Referring now also to the explanatory diagram of Figure 4, the side surfaces 26 for each rib 22 are substantially planar and make equal and opposite angles β with the planar surface 18 (dotted and dashed line) of the substrate 16. As known to those skilled in the art, the angles β are chosen to select the surfaces of the rib 22 from which operational light rays R, P entering the system 10 through the rear side 14 in a direction perpendicular to the surface 18 can exit the sheet 11. More specifically, in order to control the directions of the light rays R, P travelling through the system 10, the angles β are chosen such that they establish the conditions for total internal reflection at the side surfaces 26. These conditions are so established when each angle β is in a range between approximately 43° and 85°; the particular value being a matter of design choice.

In this embodiment, the ray R is transmittable (undeflected) out of the system through the apex 24a of the convex front surface 24. The planar side surfaces 26 are sloped (β=65°) such that they are optically non-transmissive for an operational ray P travelling parallel to the ray R and being incident upon the surface 26 (i.e. air-rib interface) at an angle θ greater than the critical angle θ$_c$ (e.g. θ$_c$=42°). Such rays P are totally reflected back into the sheet 11 and ultimately leave the system 10 through the front surface 24 as shown. In Figure 4 H is a normal to the surface 26.

In order to reduce reflection of ambient light at the front side 12 and to increase correspondingly the contrast of operational light rays P, R as viewed in a direction facing the front side 12, an amount of light-absorbent discrete particles 30 (Figure 2) is disposed in the groove 28. The disposed amount should be sufficient to present a black surface having a large area for absorbing ambient light A without covering any rib surfaces 24 designed for passing operational light. Thus, for example, the particles 30 may fill the groove 28 for approximately 75% of the height h to a level I so that an outer portion 36 of particles is located between the ribs 22 at a position generally remote from the rear surface 20.

Each particle must have a highly light-absorbent chemical composition, and should have dimensions (size) such that each substantially totally absorbs visible ambient light impinging upon that particle. Preferably, each particle is round and has a size in a range between approximately .5 and 20 microns diameter with 10 microns diameter being a number average particle size. Each particle 30 preferably comprises carbon black and/or another black substance provided with a polymer material (e.g. a thermoplastic) fusible without damaging the sheet 11.

For example, and not by way of limitation, a common electrostatic photocopy machine toner powder manufactured by the 3M Company and marketed under the name "ESP Toner" may be used with the polymethylmethacrylic sheet 11. Each particle of such toner powder is heat fusible in a range of 80° to 115°C, spherically-shaped and has the following dimension and chemical composition (by weight):

Number average size—10 microns diameter;

Composition—25 to 70 per cent of a thermoplastic binder material (e.g. a mixture of polystyrene and a polyolefin-vinyl acetate copolymer), 30 to 75 per cent of a magnetically permeable component (e.g. magnetite, and .5 to 2.0 per cent of a conductive carbon.

The binder, magnetic component and carbon are suitably blended together to form the dry toner particles as disclosed in the previously mentioned U.S. Patent No. 4,262,077.

Of course, each particle may be formed entirely of any blackened thermoplastic material or other heat/chemically-fusible blackened material. Further, the amount of groove disposed particles may contain individual particles whose respective chemical compositions are not identical although light-absorbent.

The particles 30 are disposed in the groove 28, for example, by dumping or otherwise applying a sufficiently large quantity of particles on the front side 12 so that a quantity of the particles is disposed within the groove. Undesirably disposed particles (those on the front surfaces 24, and those within the groove 28 and above the level I) may then be removed by a suitable wiping operation. For example, a brush (not shown) may be moved simultaneously along the front and side surfaces 24, 26 so that the undesired particles are pushed off the sheet 11. The brush should have bristles positioned and dimensioned such that the moving brush not only wipes the surfaces 24 but also removes part of the particle quantity down to the level I. As a result, the desired amount of particles is easily disposed within the groove 28.

As shown in Figure 3, the disposed particles are contained within the groove 28 by a front outer skin 34 which is attached to the respective sides 26 forming the groove 28. The skin 34 may be formed of a thin transparent thermoplastic material such as an acrylic plastic applied by means of known techniques; see the *Modern Plastics Encyclopedia*, pages 14—18. Preferably, however, the skin 34 is black and comprises a fused outer portion of the groove disposed particles 30. Also, the black skin 34 desirably has an average thickness in a range between approximately 40 and 90 microns. This thickness, typically, is essentially uniform although it may be variable within the range.

Fusing an outer portion 36 of the disposed black particles (Figure 2) can be accomplished in several ways without adversely affecting the transparent sheet 11. Suitably directed heat lamps (not shown; for example, flash lamps) can apply, to the front side 12, an intense heat of a suitable wavelength for selectively acting on the outer portion 36 so that those particles are fused to each other and to the surfaces 26. Upon removing the heat, the fused particles form the black skin 34 disposed over the groove 28 and attached to the surfaces 26. The intensity and duration of the applied heat affect the thickness of the skin 34.

Alternatively, appropriate chemical solvents or solvent vapors, for example, a trichloroethylene ($C_2HCl_3$) vapor may by momentarily contacted with the outer particles 36 (e.g. "ESP" toner) to form a desirable black outer skin. As is well known to those skilled in the art, a suitable vapor degreaser may be utilized to contact the vapor with the particles.

Significantly, the underlying discrete particles 30 provide minimal physical and, thus, optical contact with the side surfaces 26. These particles 30 do not significantly affect the critical angle $\theta_c$ for the ribs 22 interfacing with an air medium ($n_2 \cong 1$). Thus, total internal reflection of light at the air-rib interface is desirably maintained while the system 10 presents a highly absorbent surface 34 to the ambient light.

Finally, although the black outer skin 34 provides more than a minimal optical contact with the relevant side surface 26, it has been found by the inventor not to affect significantly the system's overall performance.

While there has been shown and described what is at present considered the preferred embodiment of the blackened optical system according to the present invention, it will be understood by those skilled in the art that various changes and modifications may be made therein without departing from the spirit and scope of the invention as defined by the appended claims.

For example, in the case of an outer skin which is transparent, non-fusible black discrete particles may be used. Also, in the case of either a transparent or black skin, the particles may have an irregular or assymetrical shape provided that the required minimal contact with the rib side surfaces is maintained.

**Claims**

1. An optical transmission sheet, comprising a substrate having a planar front surface; and a plurality of elongate mutually parallel ribs provided on the front surface, the ribs being successively laterally adjacent, each rib being laterally spaced from a successively adjacent rib to form a respective groove therebetween, characterized in that in each groove an amount of light-absorbent discrete particles is disposed loosely and contained by means for containing the particles within the grooves.

2. An optical transmission sheet, as claimed in Claim 1, characterized in that the ribs are formed of a transparent medium having a first refractive index, and the surrounding medium has a second refractive index, the first and the second refractive indexes determining a critical angle $\theta_c$ for a total internal reflection of a light ray transmitted through the rear surface and incident upon the interface between a rib and the surrounding medium.

3. An optical transmission sheet as claimed in Claim 1 or 2, characterized in that the containing means include a skin extending between the ribs and over the groove.

4. An optical transmission sheet as claimed in Claim 1 or 2, characterized in that each particle comprises a fusible material.

5. An optical transmission sheet as claimed in Claim 3, characterized in that the skin consists essentially of a fused portion of the disposed particles.

6. An optical transmission sheet as claimed in any of the Claims 1—5, characterized in that the particles have a number average particle size of approximately 10 micrometer diameter.

7. An optical transmission sheet as claimed in Claim 3 or 5, characterized in that the skin has an average thickness in a range between approximately 40 and 90 micrometer.

8. A method of blackening an optical transmission sheet with a substantially planar substrate having a plurality of elongate mutually parallel ribs provided on a surface of the substrate, the ribs being successively laterally adjacent, each rib being laterally spaced from a successively adjacent rib to form a respective groove therebetween, characterized by disposing an amount of light-absorbent discrete particles in each groove, and containing the particles within respective grooves.

9. A method as claimed in Claim 8, characterized in that the containing step includes fusing a portion of the particles disposed in each groove to form a skin extending between respective ribs.

10. A rear projection screen comprising an optical transmission sheet as claimed in any of the Claims 1—7.

**Patentansprüche**

1. Optische Übertragungsplatte, die ein Substrat mit einer planaren Vorderfläche und eine Anzahl länglicher, zueinander parallel verlaufender Rippen auf der Vorderfläche enthält, wobei die Rippen einander aufeinanderfolgend in lateraler Richtung benachbart sind, wobei jede Rippe in lateraler Richtung im Abstand von einer aufeinanderfolgend benachbarten Rippe liegt, um eine jeweilige Rille zwischen ihnen zu bilden, dadurch gekennzeichnet, daß in jeder Rille eine Menge lichtabsorbierender diskreter Partikeln lose eingebracht und darin mit Haltemitteln zum Festhalten der Partikeln in den Rillen festgehalten werden.

2. Optische Übertragungsplatte nach Anspruch 1, dadurch gekennzeichnet, daß die Rippen aus einem transparenten Medium mit einem ersten Brechungsindex gebildet sind und das umgebende Medium einen zweiten Brechungsindex besitzt, wobei die ersten und die zweiten Brechungsindizes einen kritischen Winkel $\theta_c$ für eine innere Totalreflektion eines Lichtstrahls bestimmen, der durch die Rückfläche hindurch übertragen wird und auf die Schnittfläche zwischen einer Rippe und dem umgebenden Medium auftrifft.

3. Optische Übertragungsplatte nach Anspruch 1 oder 2, dadurch gekennzeichnet, daß die Haltemittel eine Haut enthalten, die sich zwischen den Rippen und über die Rille erstreckt.

4. Optische Übertragungsplatte nach Anspruch 1 oder 2, dadurch gekennzeichnet, daß jede Partikel einen schmelzbaren Werkstoff enthält.

5. Optische Übertragungsplatte nach Anspruch 3, dadurch gekennzeichnet, daß die Haut im wesentlichen aus einem schmelzbaren Teil der eingebrachten Partikeln besteht.

6. Optische Übertragungsplatte nach einem der Ansprüche 1 bis 5, dadurch gekennzeichnet, daß die Partikeln eine Zahlenmittel-Partikelgröße von ungefähr 10 μm Durchmesser besitzen.

7. Optische Übertragungsplatte nach Anspruch 3 oder 5, dadurch gekennzeichnet, daß die Haut eine mittlere Dicke in einem Bereich zwischen etwa 40 und 90 μm hat.

8. Verfahren zum Anschwärzen einer optischen Übertragungsplatte mit einem in wesentlichen planaren Substrat mit einer Anzahl länglicher zueinander parallel verlaufender Rippen auf einer Oberfläche des Substrats, wobei die Rippen aufeinanderfolgend lateral benachbart sind, wobei sich jede Rippe in lateraler Richtung im Abstand von einer aufeinanderfolgend benachbarten Rippe befindet, um dazwischen eine jeweilige Rille zu bilden, dadurch gekennzeichnet, daß eine Menge lichtabsorbierender diskreter Partikeln in jeder Rille eingebracht wird und die Partikeln in den jeweiligen Rillen festgehalten werden.

9. Verfahren nach Anspruch 8, dadurch gekennzeichnet, daß der Festhalteschritt das Schmelzen eines Teils der Partikeln in jeder Rille umfaßt, um eine Haut zu bilden, die sich zwischen jeweiligen Rippen erstreckt.

10. Rückprojecktionsschirm mit einer optischen Übertragungsplatte nach einem der Ansprüche 1 bis 7.

**Revendications**

1. Plaque de transmission optique coportant un substrat ayant une surface avant plane pourvu d'une pluralité de nervures allongées mutuellement parallèles, les nervures étant successivement latéralement voisines et chaque nervure étant séparée latéralement d'une nervure successivement voisine de façon à former une gorge entre celles-ci, caractérisée en ce que, dans chaque gorge, une quantité de particules discrètes absorbant la lumière est disposée en vrac et est enfermée par des moyens de fermeture pour enfermer les particules dans les gorges.

2. Plaque de transmission optique selon la revendication 1, caractérisée en ce que les nervures sont formées d'un milieu transparent ayant un premier indice de réfraction, le milieu environnant ayant un deuxième indice de réfraction, les premier et deuxième indices de réfraction déterminant un angle critique $\theta_c$ pour une réflexion intérieure totale d'un rayon lumineux transmis à travers la surface arrière et incident à l'interface entre une nervure et le milieu environnant.

3. Plaque de transmission optique selon la revendication 1 ou 2, caractérisée en ce que les moyens de fermeture comportent une peau s'étendant entre les nervures et sur la gorge.

4. Plaque de transmission optique selon la revendication 1 ou 2, caractérisée en ce que chaque particule comporte un matériau fusible.

5. Plaque de transmission optique selon la revendication 3, caractérisé en ce que la peau est essentiellement constituée par une partie fondue des particules disposées.

6. Plaque de transmission optique selon l'une quelconque des revendications 1 à 5, caractérisée en ce que les particules ont une grosseur moyenne au nombre égale à 10 micromètres de diamètre environ.

7. Plaque de transmission optique selon la revendication 3 ou 5, caractérisé en ce que la peau a une épaisseur moyenne située dans une gamme comprise entre 40 et 90 micromètres environ.

8. Procédé de noircissement d'une plage de transmission optique munie d'une substrat sensiblement plan ayant une pluralité de nervures allongées mutuellement parallèles prévues sur une surface du substrat, les nervures étant successivement latéralement voisines et chaque nervure étant séparée latéralement d'une nervure successivement voisine de façon à former une gorge entre celles-ci, caractérisé en ce qu'on dispose dans chaque gorge une quantité de particules discrètes absorbant la lumière et en ce qu'on enferme les paticules dans les gorges.

9. Procédé selon la revendication 8, caractérisé en ce que l'étape consistant à enfermer les particules comporte la fonte d'une partie des particules disposées dans chaque gorge de façon à former un revêtement s'étendant entre les nervures correspondantes.

10. Ecran de projection par transparence comportant une plaque de transmission optique selon l'une quelconque des revendications 1 à 7.

FIG. 1

FIG. 2

FIG. 3

FIG. 4